# EUROPEAN PATENT APPLICATION

(11) **EP 4 385 325 A1**
(43) Date of publication of application: **19.06.2024**
(21) Application number: 23215620.8
(22) Date of filing: 11.12.2023
(51) Int. Cl.: A01N 25/04, A01N 25/22, A01N 39/02, A01N 43/82

(54) **SUSPENSION CONCENTRATE AGRICULTURAL COMPOSITIONS OF AMIDE AND ANILIDE HERBICIDES STABILIZED WITH ACTIVATED CARBON**

(30) Priority: 12.12.2022 US 202263431812 P
(71) Applicant: FMC Agricultural Solutions A/S, 7673 Ronland (DK)
(72) Inventor: GYLLING, Søren, Lemvig (DK)
(74) Representative: Dehns

(57) **Abstract**

This application relates to a suspension concentrate composition comprising an amide or anilide herbicide and activated carbon. This application also relates to a method of stabilizing an agricultural suspension concentrate comprising adding activated carbon to the suspension concentrate. This application also relates to a process for maintaining the stable viscosity of a suspension concentrate by adding activated carbon to the suspension concentrate composition.

## Description

### FIELD OF THE INVENTION

The present invention is related to agricultural suspension concentrate compositions of amide and anilide herbicides and to methods of stabilizing such compositions with activated carbon. The invention is particularly related to stabilized agricultural suspension concentrate compositions comprising activated carbon.

### BACKGROUND OF THE INVENTION

Stability of agricultural mixtures can be an important factor which can substantially determine the usefulness and/or effectiveness of the mixture to a grower. Reliability and confidence in the effectiveness of such agricultural suspension concentrates can be undercut if the mixture and/or its components degrade or change over time, or are affected by changes in the storage conditions. The instability of complex agricultural mixtures can produce chemical instability of the components of the mixture and/or actual physical instability of the mixture. For example, interactions between active ingredients and other components within such mixtures can produce changes to the active ingredients and thereby reduce the effective concentration of active ingredient(s). Similarly, the storage environment of such mixtures can cause changes in the composition of agricultural suspension concentrates. Chemical changes can include, for example: hydrolysis reactions, oxidation/reduction reactions, or acid-base reactions that render the active materials less active or completely inactive; and, the formation of dimers, polymers. Physical changes can include, for example: the formation of micelles that can tend to reduce the availability or the effective concentration of the active component, and thereby affect the effective application rate; phase separation, such as precipitation, gas evolution and separation of immiscible liquid phases; viscosity changes; and other such changes that can result from chemical modifications and thereby render the mixture unusable or less effective.

Physical changes in a mixture can take place in the absence of chemical changes. For example, phase separation, sedimentation, agglomeration, particle growth, and/or crystallization are physical processes that can all affect the efficacy of an agricultural formulation. This problem can be exacerbated if the instability is not readily observed, detected or reversed.
It can be problematic if a loss of stability caused by chemical or physical changes occurs or is accelerated under ambient storage conditions, or where storage conditions are not controlled. For example, shipping and/or storage of agricultural suspension concentrates under uncontrolled temperature conditions can expose the shipped materials to prolonged periods of storage at elevated temperatures. Storage at elevated temperatures can promote undesirable chemical and/or physical changes to an agricultural suspension concentrate.

Suspension concentrates (also referred to herein as "SC's") are agricultural mixtures that are commonly used to protect crops and/or remove competition to the growing crops by suppression of weed growth. Particle growth in a suspension concentrate can lead to undesirable viscosity increase during shipping and/or storage.

It is desirable to prevent physical or chemical instability that can occur in an agricultural suspension concentrate. It can be particularly desirable to prevent particle growth in a suspension concentrate during shipping or storage.

### SUMMARY OF THE INVENTION

In one aspect, the present invention is a suspension concentrate composition comprising: (i) an amide or anilide herbicide suspended in a liquid matrix; and (ii) activated carbon present in an amount of at least about 0.5 wt% of the suspension concentrate.

In another aspect, the present invention is a method of stabilizing a herbicide suspension concentrate formulation comprising the step of including activated carbon as a component in the agricultural formulation.

In another aspect, the present invention is a process for maintaining stable viscosity in a suspension concentrate composition of an herbicidally active component, the process comprising the step: mixing activated carbon with a suspension concentrate composition to obtain a suspension concentrate with activated carbon to provide a stabilized suspension concentrate.

### DETAILED DESCRIPTION OF THE INVENTION

In one embodiment, this application describes of agricultural composition that are stabilized by the addition of activated carbon. Herbicide compositions suitable for the practice of the present invention include suspension concentrates that are stabilized by activated carbon, wherein solid particles of agriculturally active materials are suspended in a liquid matrix. Suspension concentrates that are stabilized according the methods of the present invention are conventional, and typically include an agriculturally active component that is a solid at ambient temperature, suspended in a liquid matrix, or liquid phase. Suspension concentrates can comprise more than one agriculturally active component. The liquid phase or matrix can be any liquid in which the agriculturally active component is not readily soluble or is insoluble. The liquid phase can be selected from: organic liquids including, for example oils, hydrocarbons, alcohols, halogenated hydrocarbons; water; or mixtures of organic liquids and water. Typically, the liquid matrix is aqueous-based; that is, for the purposes of the present invention, water is present in an amount ranging from about 10% to about 100%, or from about 20 to about 100%, or from about 40 to about 100%, or at least about 50% of the liquid, based on the total volume of liquid used.

A suspension concentrate suitable for the practice of the present invention typically includes a dispersant. The dispersant can be any dispersant that is effective in suspending the active component, including cationic, non-ionic, or anionic surfactants. The dispersant is typically a non-ionic or anionic surfactant, and more typically an anionic surfactant.

The stabilized suspension concentrate of the present invention typically includes other components that aid in suspending the active component and/or provide other benefits to the suspension concentrate including, for example: wetting agents; viscosity modifiers; defoaming agents; stabilizers; antimicrobials; anti-freeze agents; and buffers. It would be known to one of ordinary skill in the art of agricultural formulation that other additives, optional or otherwise, can be included in a suspension concentrate to obtain a conventional suspension concentrate that is suitable for the purposes of the present invention.

A stabilized suspension concentrate of the present invention includes activated carbon. Activated carbon has been previously described in WO1996038039 A1 as useful in agricultural formulations as a solid matrix for controlled release of active components. Activated carbon does not form a solid matrix in the present application. The present application describes activated carbon included in a suspension concentrate where the suspension concentrate exists in a liquid matrix.

In one embodiment, activated carbon is included in the suspension concentrate in an "effective amount" - i.e. any amount of activated carbon that is effective in preventing an increase in viscosity of the suspension concentrate over time, or preventing particle growth of suspended particles in a suspension concentrate over time, at ambient and/or elevated temperatures. An "effective amount" of activated carbon can be any amount of activated carbon that is effective in inhibiting the destabilizing effect of other components in a suspension concentrate. In some embodiments an effective amount is an amount of activated carbon required to reverse the destabilization of a suspension concentrate. An "effective amount" of activated carbon can be based upon the concentration of the active component in the suspension concentrate or, alternatively, based upon the weight of the suspension concentrate. In either case, the specific "effective amount" of activated carbon included in a suspension concentrate can vary based upon the identity of the active component. Alternatively, an effective amount of activated carbon can be based upon the specific amount and/or identity of a de-stabilizing agent present in the suspension concentrate. For the purposes of the present invention, an effective amount of activated carbon is typically an amount greater than about 0.5 wt% of activated carbon, based on the weight of the suspension concentrate. Even though activated carbon can be included at high levels and remain effective in stabilizing a suspension concentrate as described herein, there may be other reasons for imposing an upper limitation to the amount of activated carbon included in a stabilized formulation. Reasons for an upper limit can be unrelated to the effectiveness of the activated carbon as described herein, and can include, for example: lost cost effectiveness for including additional activated carbon without commensurate additional benefits; or, environmental concerns over adding excess activated carbon and applying said excess to treated areas. In view of such reasons for an upper limit, activated carbon can be included in any amount of from about 0.5 wt% to about 20 wt% to be effective in stabilizing a suspension concentrate, or from about 0.5 wt% to about 10 wt%, or from about 1 wt% to about 5 wt% of the suspension concentrate.

In one embodiment of the present invention, a stabilized suspension concentrate composition consists essentially of a suspension concentrate of an agriculturally active component and activated carbon in an amount of from about 0.5 to about 20 wt%, based on the weight of the suspension concentrate. It can remain for a person of ordinary skill in the art to determine the effective amount of activated carbon for a specific SC, without departing from the teaching and scope of the present invention, and/or without requiring an amount of experimentation that is unreasonable or undue given the teaching herein.

Activated carbon used in the practice of the invention can have any particle size that is physically practical for use in apparatus used to apply the suspension concentrate. Particle size of the activated carbon can be limited to preferably less than about 5 µm, or less than about 4 µm, or less than about 3 µm. The activated carbon can be milled to obtain the desired particle size. Alternatively, the activated carbon may not require milling for use in the practice of the present invention. Activated carbon suitable for use in the practice of the present invention can be obtained commercially.

The herbicidally active component can be any solid amide or anilide herbicide that can be suspended to form a suspension concentrate. Suspension concentrates that are stabilized according the methods of the present invention are conventional prior to the addition of activated carbon, and typically include an amide or anilide herbicide component that is a solid at ambient temperature, suspended in a liquid matrix, or liquid phase. The present invention is particularly useful for increasing the storage stability of products comprising amide or anilide herbicide components that are prone to particle size growth and viscosity increase, particularly where the products are suspension concentrates. Particle growth in a suspension concentrate can eventually lead to destabilization of the suspension due to liquid/liquid phase separation, precipitation, or sedimentation of any of the components of the suspension, but most notably the amide or anilide herbicide component.

Suitable amide herbicides include, but are not limited to allidochlor, amicarbazone, beflubutamid, beflubutamid-M, benzadox, benzipram, bromobutide, cafenstrole, CDEA, cyprazole, dimethenamid, dimethenamid-P, diphenamid, epronaz, etnipromid, fentrazamide, flucarbazone, flupoxam, fomesafen, halosafen, huangcaoling, isocarbamid, isoxaben, napropamide, napropamide-M, naptalam, pethoxamid, propyzamide, quinonamid, saflufenacil, tebutam, and tiafenacil and agriculturally acceptable salts and esters thereof. Preferred as an amide herbicide for the present invention is selected from beflubutamid or beflubutamid-M or mixtures thereof or agriculturally acceptable salts or esters thereof.

Suitable anilide herbicides, include, but are not limited to, chloranocryl, cisanilide, clomeprop, cypromid, erlujixiancaoan, etobenzanid, fenasulam, flufenacet, flufenican, ipfencarbazone, mefenacet, mefluidide, metamifop, monalide, naproanilide, pentanochlor, picolinafen, propanil, and triafamone and agriculturally acceptable salts and esters thereof. Preferred as an anilide herbicide for the present invention is selected from flufenacet, or agriculturally acceptable salts or esters thereof.

The suspension concentrate can further comprise an additional herbicide active ingredient. Of note as the additional herbicide is diflufenican.

The suspension concentrate can further comprise a herbicide safener. The herbicide safener may be selected from cloquintocet, cloquintocet-mexyl, isoxadifen, isoxadifen-ethyl and mefenpyr dietyl. Of note as the herbicide safener is cloquintocet-mexyl.

The suspension concentrate is conventional in every aspect prior to the addition of the activated carbon, and therefore the concentration of the active component can be substantially the same as conventional compositions of the active component. For example, the active component can be present in an amount of from about 0.01 wt% to about 99.99 wt% of the suspension concentrate, or from about 0.1 wt% to about 99.9 wt%, or from about 5 wt% to about 95 wt%, or from about 10 wt% to about 90 wt%.

In another embodiment, the present application provides a method for stabilizing a suspension concentrate of an agriculturally active component, the method comprising the step of adding activated carbon to the suspension concentrate. The activated carbon can be added at the time that the suspension concentrate is prepared or, alternatively, immediately after the suspension concentrate is obtained or, alternatively, after the suspension concentrate has been stored. In one embodiment it is preferred to add the activated carbon at the time the suspension concentrate is prepared. In another embodiment the activated carbon is added within 48 hours of said preparation.

In one embodiment, the present invention is a method for stabilizing a suspension concentrate by remediating the viscosity of the suspension concentrate to either (i) stop viscosity increase or (ii) reduce the viscosity of the suspension concentrate mixture after the viscosity has increased over time, compared to the initial viscosity of the suspension concentrate. In the method of remediating the viscosity, activated carbon can be added to a suspension concentrate and dispersed within the concentrate to cease particle growth of the suspended active component in the mixture.

Other benefits can be realized from including activated carbon in a suspension concentrate composition, such as cessation of phase separation, sedimentation, crystallization or polymerization of the agriculturally active component, for example. The following examples and comparative examples illustrate certain embodiments of the invention. The examples are not intended to be illustrative of the invention in its full scope.

### EXAMPLES

### EXAMPLE 1: Addition of Activated Carbon to Stabilize Beflubutamid-M.

Beflubutamid-M was milled using a wet media mill to provide a beflubutamid-M suspension concentrate (SC) having a beflubutamid-M content of 400 g/L that included 10 g/L of a dispersant (Morwet D425 alkylnaphthalene sulfonate condensate, available from Nouryon corporation) and 10 g/L of activated carbon (Norit SX). The particle size of the prepared SC was Dv(0.5) 1.49 µm. The sample remained stable upon aging at 40 °C. After one week of aging the particle size was Dv(0.5) 1.68 µm, after 8 weeks of aging at 40 °C, the particle size was Dv(0.5) 1.64 µm. Hence, the sample satisfied the typical accelarated storage condition of 8 weeks at 40 °C.

### COMPARATIVE TO EXAMPLE 1

A beflubutamid-M 400 g/L SC was prepared using a wet media mill that included 10 g/L of a dispersant (Morwet D425 alkylnaphthalene sulfonate dispersant) in the absence of activated carbon. Particle size after milling was Dv(0.5) 1.49 µm. The sample was aged at 40 °C, after one week of aging, the particle size was Dv(0.5) 1.7 µm. But the sample turned stiff on aging for 8 weeks at 40 °C. Hence, the sample did not pass the typical accelerated stability requirement.

### EXAMPLE 2: Improving the Stability of a Formulation

Beflubutamid (provided by Beflex^{™} herbicide commercialy available from the FMC Corporation) was analyzed for benzylidene benzylamine as an impurity by gas chromatography (0.10%). The initial particle size was meaesured as Dv(0.5) 4.4 µm. To this formulation was added 0.50% Supragil (available from the Solvay company) and the resulting mixture was further milled. Particle size after milling was measured as Dv(0.5) 2.3 µm. Activated carbon (proided by Norit SX as supplied by Cabot) was incrementally added and the stability of the samples checked after storing for 2 weeks at different temperatures. The results are summarized in Table 1. The sample with 1.0% Norit SX had good stability after two weeks at all the test temperatures.

**Table 1: Storage For 2 Weeks**

| Sample No. | Quantity of Norit SX added (%) | Stability at Different Temperatures | | |
|---|---|---|---|---|
| | | 35 °C | 40 °C | 47 °C |
| 1 | 0% | solidified | solidified | solidified |
| 2 | 0.25% | solidified | solidified | solidified |
| 3 | 0.5% | OK | solidified | solidified |
| 4 | 1.0% | OK | OK | OK |

### EXAMPLE 3: Stabilization of Flufenacet

FIPA-formamide (flourophenyl isopropyl amine-formamide) is an impurity found in flufenacet SC formulations and is reported to induce significant particle growth in such samples. Samples of flufenacet (provided as a technical material in a 500 g/L SC) were prepared without adding Norit SX-Ultra (available from Cabot) and spiking with 0%, 0.3% and 1% FIPA-formamide, as well as with 3.0% of Norit SX-Ultra and the same 0%, 0.3% and 1% levels of FIPA-formamide. Initial particle size was measured at room temperature as well as at 2 weeks at 54 °C aged samples. The results are summarized in Table 2 below. The addition of Norit SX-Ultra improves the stability of flufenacet 500 g/L SC formulation; the sample with even 0.3% florophenyl FIPA-formamide remains stable after aging for 2 weeks at 54 °C. Particle growth is also controlled in the presence of Norit SX-Ultra in the sample without the FIPA-formamide impurity.

**Table 2: Particle Size, (Dv(0.50) in µm) of 500 g/L Flufenacet SC Formulation with Different Levels of FIPA-formamide Impurity.**

| Sample Description | FIPA-formamide | | | | | |
|---|---|---|---|---|---|---|
| | 0% | | 0.3% | | 1% | |
| | w/carbon | w/o carbon | w/carbon | w/o carbon | w/carbon | w/o carbon |
| Room Tempurature | 1.6 µm | 1.2 µm | 1.3 µm | 1.3 µm | solidified | solidified |
| Aged 2 Weeks at 54°C | 2.7 µm | 5.1 µm | solidified | solidified | solidified | solidified |

| | | | | | | |
|---|---|---|---|---|---|---|
| w/carbon means "with 3.0% Norit SX Ultra"; w/o carbon means "without Norit SX Ultra" | | | | | | |

### EXAMPLE 4: Stabilization of Flufenacet Plus Diflufenican (400/100 g/L SC).

A mixed suspension concentrate formulation was prepared from technical material to contain 400 g/L of flufenacet and 100 g/L of diflufenican and included 7 g/L of a dispersant (Synperonic PElF 127 polyalkylene oxide block copolymer available from Croda). The initial particle size was meaesured as Dv(0.5) 1.7 µm. The prepared SC was divided, and various levels of activated carbon (Norit SX-Ultra) were added. Different procedures were applied to the divided samples, one with the addition of activated carbon before and one after the milling process. Surprisingly, it was discovered that an addition of small quantities of activated carbon led to an almost complete cessation of particle growth. As shown in Table 3, the addition of about 6 g/L of Norit SX-Ultra (either before or after milling the formulation) completely stopped the crystal growth. Suspensibility of the formulation after aging for an additional 2 weeks at 54 °C improved to above 90%.

**Table 3: Percent Suspensibility of Flufenacet After 2 weeks at 54 °C With Different Quantities of Activated Carbon**

| | Activated carbon | | | |
|---|---|---|---|---|
| | 1.5 g/L | 2 g/L | 3 g/L | 6 g/L |
| with milling of activated carbon | 80 | - | 88 | 92 |
| without milling of activated carbon | - | 81 | - | 95 |

Table 3 above also shows that the addition of activated carbon imposes a dramatic effect on the flufenacet suspensibility, even at very low concentrations. The quantity of activated carbon necessary to induce an almost complete cessation of the particle growth is 6 g/L. Milling of the activated carbon induced no significant impact on the efficacy.

### COMPARATIVE TO EXAMPLE 4

A mixed suspension concentrate formulation was prepared from technical material to contain 400 g/L of flufenacet and 100 g/L of diflufenican and included 7 g/L of a dispersant (Synperonic PElF 127 available from Croda). The initial particle size was meaesured as Dv(0.5) 1.7 µm. The suspensibility after 2 weeks at 54 °C was found to be only 60-70%.

Embodiments of the invention include the following:
Embodiment 1. A suspension concentrate composition comprising: (i) an agriculturally active component selected from an amide or anilide herbicide suspended in a liquid matrix; and (ii) activated carbon present in an amount of at least about 0.5 wt% of the suspension concentrate.
Embodiment 2. The suspension concentrate composition of Embodiment 1 wherein the agriculturally active component is selected from the group consisting of beflubutamid-M, beflubutamid and flufenacet or mixtures thereof.
Embodiment 3. The suspension concentrate composition of Embodiment 1 or Embodiment 2 wherein the activated carbon is present in an amount of from about 0.5 wt% to about 20 wt%.
Embodiment 4. The suspension concentrate composition of Embodiment 3 wherein the activated carbon is present in an amount of from about 0.5 wt% to about 10 wt%.
Embodiment 5. The suspension concentrate composition of Embodiment 4 wherein the activated carbon is present in an amount of from about 1 wt% to about 5 wt%.
Embodiment 6. The suspension concentrate composition of any preceding Embodiment wherein the agriculturally active component is selected from the group consisting of beflubutamid-M and beflubutamid; and mixtures thereof.
Embodiment 7. The suspension concentrate composition of any preceding Embodiment wherein the agriculturally active component is beflubutamid-M.
Embodiment 8. A method of stabilizing a herbicide suspension concentrate formulation comprising the steps of i) preparing a suspension concentrate; and ii) adding activated carbon to the suspension concentrate.
Embodiment 9. The method of Embodiment 8 wherein herbicide suspension concentrate comprises an amide or anilide herbicide.
Embodiment 10. The method of Embodiment 9 wherein the herbicide is selected from the group consisting of beflubutamid-M, beflubutamid and flufenacet; and mixtures thereof.
Embodiment 11. The method of Embodiment 8 or Embodiment 9 wherein a further herbicide other than an amide or anilide herbicide is added to the suspension concentrate. Embodiment 12. The method of any of Embodiments 8 to 11 wherein the activated carbon is added in an amount of from about 0.5 wt% to about 20 wt%.
Embodiment 13. The method of Embodiment 12 wherein the activated carbon is present in an amount of from about 0.5 wt% to about 10 wt%.
Embodiment 14. The method of Embodiment 12 wherein the activated carbon is added in amount of from about 1 wt% to about 5 wt%.
Embodiment 15. A process for maintaining stable viscosity in a suspension concentrate composition of an agriculturally active component, the process comprising the step: mixing activated carbon with a suspension concentrate composition to obtain a suspension concentrate/activated carbon composition of any of Embodiments 1 to 7.
Embodiment 16. The process of Embodiment 15 wherein the activated carbon is mixed with the suspension concentrate at the time of forming the suspension concentrate.
Embodiment 17. The process of Embodiment 15 wherein the activated carbon is mixed with the suspension concentrate after the suspension concentrate is formed.
Embodiment 18. The process of Embodiment 15 wherein the activated carbon is mixed with the suspension concentrate within 48 hours after the suspension concentrate is formed.
Embodiment 19. The process of Embodiment 15 wherein the activated carbon is mixed with the suspension concentrate 48 hours or more after the suspension concentrate is formed.
Embodiment. 20. The process of Embodiment 15 wherein the activated carbon is mixed with the suspension concentrate two weeks or more after the suspension concentrate is formed.

## Claims

1. A suspension concentrate composition comprising: (i) an agriculturally active component selected from an amide or anilide herbicide suspended in a liquid matrix; and (ii) activated carbon present in an amount of at least about 0.5 wt% of the suspension concentrate.

2. The suspension concentrate composition of Claim 1 wherein the agriculturally active component is selected from the group consisting of beflubutamid-M, beflubutamid and flufenacet or mixtures thereof.

3. The suspension concentrate composition of Claim 1 or Claim 2 wherein the activated carbon is present in an amount of from about 0.5 wt% to about 20 wt%.

4. The suspension concentrate composition of Claim 3 wherein the activated carbon is present in an amount of from about 1 wt% to about 5 wt%.

5. The suspension concentrate composition of any preceding Claim wherein the agriculturally active component is selected from the group consisting of beflubutamid-M and beflubutamid; and mixtures thereof.

6. The suspension concentrate composition of any preceding Claim wherein the agriculturally active component is beflubutamid-M.

7. A method of stabilizing a herbicide suspension concentrate formulation comprising the steps of i) preparing a suspension concentrate; and ii) adding activated carbon to the suspension concentrate.

8. The method of Claim 7 wherein herbicide suspension concentrate comprises an amide or anilide herbicide.

9. The method of Claim 8 wherein the herbicide is selected from the group consisting of beflubutamid-M, beflubutamid and flufenacet; and mixtures thereof.

10. The method of Claim 7 or Claim 8 wherein a further herbicide other than an amide or anilide herbicide is added to the suspension concentrate.

11. The method of any of Claims 7 to 10 wherein the activated carbon is added in an amount of from about 0.5 wt% to about 20 wt%.

12. A process for maintaining stable viscosity in a suspension concentrate composition of an agriculturally active component, the process comprising the step: mixing activated carbon with a suspension concentrate composition to obtain a suspension concentrate/activated carbon composition of any of Claims 1 to 6.

13. The process of Claim 12 wherein the activated carbon is mixed with the suspension concentrate at the time of forming the suspension concentrate.

14. The process of Claim 12 wherein the activated carbon is mixed with the suspension concentrate after the suspension concentrate is formed.

15. The process of Claim 12 wherein the activated carbon is mixed with the suspension concentrate within 48 hours after the suspension concentrate is formed.
